# EUROPÄISCHE PATENTSCHRIFT

(11) **EP 1 543 871 B1**
(45) Veröffentlichungstag und Bekanntmachung des Hinweises auf die Patenterteilung: **21.11.2012**
(21) Anmeldenummer: 03104783.0
(22) Anmeldetag: 18.12.2003
(51) Int. Cl.: B01D 39/08, B01D 39/16, B01D 39/20

(54) **Filter mit Filtereinsatz und Verwendung eines derartigen Filters**
Filter with filterinsert and use of such filter
Filtre avec élément filtrant et utilisation d'un tel filtre

(43) Veröffentlichungstag der Anmeldung: 22.06.2005
(73) Patentinhaber: Ford Global Technologies, LLC, A subsidary of Ford Motor Company, Dearborn, MI 48126 (US)
(72) Erfinder: Verpoort, Clemens Maria, 52074, Aachen (DE); Broda, Maik, 52249, Eschweiler (DE); Figura, Michael Georg, 41542, Dormagen (DE); Kluge, Torsten, 51491, Overath (DE)
(74) Vertreter: Drömer, Hans-Carsten

(56) Entgegenhaltungen:
- EP-A- 0 491 997
- US-A- 4 425 908
- US-A- 4 494 531
- DATABASE WPI Section Ch, Week 199621 Derwent Publications Ltd., London, GB; Class J01, AN 1996-203585 XP002281183 & JP 08 071337 A (SHARP KK) 19. März 1996 (1996-03-19)
- DATABASE WPI Section Ch, Week 198520 Derwent Publications Ltd., London, GB; Class J01, AN 1985-118703 XP002281184 & JP 60 058220 A (DAIDO TOKUSHUKO KK) 4. April 1985 (1985-04-04)
- DATABASE WPI Section Ch, Week 199906 Derwent Publications Ltd., London, GB; Class J01, AN 1999-063865 XP002281185 & JP 10 309418 A (NIPPON TUNGSTEN KK) 24. November 1998 (1998-11-24)

## Beschreibung

Die Erfindung betrifft einen Filter mit mindestens einem mit Filterporen ausgestatteten Filtereinsatz.

Des weiteren betrifft die Erfindung die Verwendung eines derartigen Filters.

Filter der gattungsbildenden Art werden in den unterschiedlichsten Bereichen eingesetzt und zwar überall dort, wo Fluide, nämlich Gase oder Flüssigkeiten, von unerwünschten Bestandteilen befreit werden sollen, wozu sie gefiltert werden. Die unterschiedlichen Filter sind in der Regel dem jeweiligen Einsatzgebiet angepaßt.

Im Rahmen der vorliegenden Erfindung sind insbesondere Anwendungen im Bereich des Automobilbaus und hier insbesondere im Bereich der Brennkraftmaschine von Interesse. Dabei soll im Rahmen der vorliegenden Erfindung unter Brennkraftmaschine nicht nur der Motor an sich, sondern auch die mit dem Motor in Zusammenhang stehenden und mit diesem zusammenarbeitenden Aggregate und Maschinensysteme verstanden werden.

Der Filter ist im Automobilbau grundsätzlich ein Verbrauchsmaterial und als Ersatzteil ausgeführt, das nach Ablauf seiner Lebensdauer, wenn eine ausreichende Filtertätigkeit nicht mehr gewährleistet ist, ausgetauscht wird. Die Porosität eines bestimmten Filtereinsatzes d. h. die Größe seiner Poren und damit seine Durchlässigkeit sind grundsätzlich unveränderlich. Die Porosität ist ein definierter, charakteristischer Kennwert jeden Filters. Mit zunehmender Gebrauchsdauer nimmt aber die Porosität in der Regel durch sich auf dem Filtereinsatz ablagernde Partikel ab. Die Partikel, welche den sogenannten Filterkuchen bilden, verengen die Strömungsquerschnitte der einzelnen Poren.

Günstig wären Filter, bei denen der Filterkuchen nach einer gewissen Gebrauchsdauer auf einfache Weise - d. h. ohne den Filter ausbauen zu müssen - entfernt werden könnte und zwar auf eine Weise, daß der Filter nach dieser Säuberung weiterverwendet werden könnte. Die Lebensdauer der Filter könnte auf diese Weise erheblich gesteigert werden. Unter Umständen entfiele der Ersatzteilcharakter, wodurch Kosten in nicht unerheblichen Umfang eingespart werden könnten. Im Automobilbereich wären dies in erster Linie Personalkosten, denn der weitaus größte Anteil der Kosten eines Filterwechsels geht auf den Arbeitslohn zurück, wohingegen der Filter an sich meist ein preiswertes Ersatzteil ist.

Vor diesem Hintergrund ist es die Aufgabe der vorliegenden Erfindung einen Filter bereitzustellen, mit welchem die nach dem Stand der Technik bekannten Nachteile überwunden werden und insbesondere der mit zunehmender Gebrauchsdauer abnehmenden Porosität entgegengewirkt wird.

Eine weitere Teilaufgabe der vorliegenden Erfindung besteht darin, Verwendungen derartiger Filter aufzuzeigen.

Gelöst wird die erste Teilaufgabe durch einen Filter Laut dem beigefügten Anspruch 1.

Formgedächtniswerkstoffe an sich - sogenannte shape memory materials oder shape memory alloys - sind seit mehr als fünfzig Jahren bekannt, siehe JP-A-60 058 220, zum Beispiel. Sie besitzen die Fähigkeit ihre äußere Gestalt in Abhängigkeit von der Temperatur, von der magnetischen Feldstärke oder von dem hydraulischen Druck, dem sie ausgesetzt sind, oder dergleichen zu ändern. Unter die Formgedächtniswerkstoffe werden im Rahmen der vorliegenden Erfindung sämtliche Werkstoffe subsumiert, die über ein Formgedächtnis verfügen, insbesondere die Formgedächtnislegierungen, aber auch Keramiken mit Formgedächtnis, wie beispielsweise Ce-TZP-Keramik.

Beispielsweise kann eine aus einem länglichen Draht geformte Büroklammer ihre Gestalt in der Art ändern, daß die Büroklammer - in einen Topf mit heißem Wasser gelegt - mit steigender Temperatur und bei Erreichen einer sogenannten Übergangstemperatur T' in ihre ursprüngliche Form übergeht d. h. die Gestalt eines länglichen Drahtes annimmt. Sie ändert dabei ihre äußere Gestalt oder - mit anderen Worten gesagt - ihre strukturelle Konfiguration. Dieser Transformationsprozeß kann sich sehr schnell vollziehen, so daß die Büroklammer gewissermaßen in die andere Konfiguration springt.

Ist dieser Transformationsprozeß umkehrbar, so handelt es sich bei dem Formgedächtniswerkstoff um einen sogenannten Zwei-Weg-Formgedächtniswerkstoff, andernfalls um einen Ein-Weg-Formgedächtniswerkstoff.

Folglich könnte der oben beschriebene Übergang der Büroklammer zu einem länglichen Draht bei geeigneter Auswahl eines Zwei-Weg-Formgedächtniswerkstoffes rückgängig gemacht werden. Hierzu wird die Temperatur abgesenkt, wobei der Draht sich bei Unterschreiten einer Übergangstemperatur T" zu einer Büroklammer umformt. Die Übergangstemperaturen T' und T" können übereinstimmen. In der Regel ist die Transformationskurve des Formgedächtniswerkstoffes in Abhängigkeit von der Temperatur aber eine Hysterese, weshalb die Übergangstemperaturen T' und T" auseinanderfallen.

Im weiteren wird, um die Beschreibung der vorliegenden Erfindung zu vereinfachen, davon ausgegangen, daß die Übergangstemperaturen T' und T" übereinstimmen, wobei Fälle, in denen dies nicht so ist, von der vorliegenden Erfindung mitumfaßt werden.

Die im oben näher beschriebenen Beispiel erwähnte Büroklammer besitzt gewissermaßen ein Gedächtnis an ihre ursprüngliche Gestalt, nämlich an ihre Form als länglicher Draht, aus dem sie geformt wurde. Ein mögliches, der Transformation zugrundeliegendes Prinzip kann die Gefügeumwandlung der Legierung sein, insbesondere die Transformation von Austenit in Martensit und umgekehrt.

Diese Gefügeumwandlung wissenschaftlich d. h. mathematisch zu beschreiben, versuchen beispielsweise Arndt, Griebel und Roubí 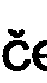 ek in ihrem Artikel *"*Modelling and numerical simulation of martensitic transformation in shape memory alloys", der am 27. Juni 2003 im Internet veröffentlicht wurde.

Außer der Gefügeumwandlung kann die Transformation von Formgedächtnislegierungen aber auch auf anderen Mechanismen beruhen, auf die an dieser Stelle nicht weiter eingegangen werden soll, da diese Mechanismen an sich nicht unmittelbarer Gegenstand der vorliegenden Erfindung sind.

Mit dem erfindungsgemäßen Filter eröffnen sich völlig neue Möglichkeiten in der Filtertechnologie. Die Porosität des Filters, die nach dem Stand der Technik einen definierten, charakteristischen und unveränderlichen Kennwert des Filters darstellt, ist bei dem erfindungsgemäßen Filter aufgrund des für die Herstellung des Filtereinsatzes verwendeten Formgedächtniswerkstoffes nunmehr variabel. Erreicht wird dies dadurch, daß die beiden Konfigurationen des Filtereinsatzes, zwischen denen die äußere Gestalt des Filtereinsatzes wechselt, sich durch unterschiedlich große Poren auszeichnen. Diese variable Porosität kann gleich auf mehrere Weisen genutzt werden.

Da mit zunehmender Gebrauchsdauer die Porosität in der Regel durch sich auf dem Filtereinsatz ablagernde Partikel, dem sogenannten Filterkuchen, abnimmt, kann den sich hierdurch verengenden Strömungsquerschnitten der einzelnen Poren dadurch entgegengewirkt werden, daß der Filtereinsatz von der einen in die andere Konfiguration, nämlich die Konfiguration mit den größeren Poren, transformiert wird. Die Abnahme der Porosität wird hierdurch kompensiert, zumindest aber wird ihr entgegengewirkt.

Eine veränderbare Porosität kann auch dazu genutzt werden, einen stark verunreinigten Filter zu säubern. So kann die Konfiguration des Filtereinsatzes für einen definierten Zeitraum in der Art verändert werden, daß die Filterporen vergrößert sind. Durch diese vergrößerten Filterporen können dann die auf dem Filtereinsatz befindlichen Partikel, die vorher noch von den kleineren Poren herausgefiltert wurden, abgeführt werden. Auf diese Weise könnte beispielsweise ein Ölfilter während des Ölwechsels gereinigt werden.

Die Funktionstüchtigkeit bzw. die Lebensdauer der erfindungsgemäßen Filter sind im Vergleich zu herkömmlichen Filtern wesentlich verbessert bzw. verlängert. Unter Umständen erreicht die Lebensdauer eines derartigen Filters die Lebensdauer eines Kraftfahrzeuges oder einer Brennkraftmaschine, wodurch der Filter seine Eigenschaft als regelmäßig zu ersetzendes Verbrauchsmaterial verliert.

Weitere Vorteile des erfindungsgemäßen Filters werden im Zusammenhang mit der Beschreibung der bevorzugten Ausführungsformen des Filters, wie sie sich aus den Unteransprüchen ergeben, erläutert.

Der mindestens eine Filtereinsatz des erfindungsgemäßen Filters soll mindestens einen Formgedächtniswerkstoff aufweisen d.h. er muß nicht vollständig aus dem mindestens einen Formgedächtniswerkstoff bestehen.

Vorteilhaft sind nämlich auch Ausführungsformen des Filters, bei denen der mindestens eine Filtereinsatz eine Matrix aufweist, in welche der Formgedächtniswerkstoff, vorzugsweise in Form von Fasern, eingebettet ist. So kann der mindestens eine Formgedächtniswerkstoff gegen Korrosion oder andere äußere Einflüsse geschützt werden.

Vorteilhaft sind dabei insbesondere Ausführungsformen des Filters, bei denen die Matrix vorwiegend aus Aluminium oder Plastik gefertigt ist. Diese Materialien verfügen über die notwendige Elastizität, welche es dem eingebetteten Formgedächtniswerkstoff ermöglicht, die Matrix mit nur geringem Kraftaufwand zu deformieren.

Vorteilhaft sind auch Ausführungsformen des Filters, bei denen der mindestens eine Filtereinsatz ein Trägersubstrat aufweist, auf das der Formgedächtniswerkstoff aufgetragen, vorzugsweise aufgesputtert, ist.

Die zuletzt erläuterten Ausführungsformen arbeiten gewissermaßen mit Verbundwerkstoffen für die Herstellung des mindestens einen Filtereinsatzes. Diese Verbundwerkstoffe zeichnen sich dadurch aus, daß sie mindestens einen Formgedächtniswerkstoff aufweisen. Vorteile bieten diese Ausführungsformen, weil mit Verbundwerkstoffen die Möglichkeit geschaffen wird, die vorteilhaften Eigenschaften mehrerer Werkstoffe zu kombinieren.

Des weiteren führen diese Ausführungen des Filtereinsatzes zu Material- und Kosteneinsparungen hinsichtlich der Formgedächtniswerkstoffe.

Vorteilhaft sind Ausführungsformen des Filters, bei denen der mindestens eine Formgedächtniswerkstoff ein Formgedächtniswerkstoff aus der folgenden Gruppe ist: NiTi (Nitinol), Fe-Pt, Cu-AI-Ni, Fe-Pd, Fe-Ni, Cu-Zn-AI, CuAIMn, Keramik, insbesondere Ce-TZP-Keramik. Vorteilhaft ist der Einsatz dieser Formgedächtniswerkstoffe deshalb, weil diese Formgedächtniswerkstoffe zu den derzeit meist verwendeten Werkstoffen gehören, so daß bereits umfangreiche Erfahrungen mit diesen Werkstoffen vorliegen, die die Applikation der Formgedächtniswerkstoffe auf den Filter wesentlich vereinfachen. Insbesondere verfügen diese Formgedächtniswerkstoffe über die notwendigen Eigenschaften, beispielsweise über eine nur gering ausgebildete Remanenz im Hinblick auf die inneren Spannungen d. h. gute Eigenschaften im Hinblick auf den Abbau der inneren Spannungen, welche sich aufgrund der Änderung der äußeren Gestalt d. h. der wiederholten Transformation ergeben. Hervorzuheben ist aber besonders die Fähigkeit dieser Formgedächtniswerkstoffe, ihre äußere Gestalt ohne Abnutzungserscheinungen und/oder ohne Zerstörungen häufig ändern zu können.

Vorteilhaft sind Ausführungsformen des Filters, bei denen der mindestens eine Formgedächtniswerkstoff mittels Temperatur steuerbar ist und mindestens eine Übergangstemperatur T₁ als Transformationspunkt aufweist, bei der der mindestens eine Filtereinsatz von einer ersten Konfiguration in eine zweite Konfiguration übergeht. Dabei ist die Realisierung der Temperatursteuerung mittels elektrischer Heizung besonders günstig. Diese Art der Temperatursteuerung bietet sich auch im Automobilbau an, da mit der Batterie bereits eine Quelle elektrischer Energie bereitsteht.

Vorteilhaft sind auch Ausführungsformen des Filters, bei denen der mindestens eine Formgedächtniswerkstoff mittels Magnetfeld steuerbar ist und mindestens eine Übergangs-Magnetfeldstärke H₁ als Transformationspunkt aufweist, bei der der mindestens eine Filtereinsatz von einer ersten Konfiguration in eine zweite Konfiguration übergeht. Vorteile bietet diese Art der Steuerung insbesondere dadurch, daß die Transformation des mindestens einen Filtereinsatzes berührungslos eingeleitet werden kann. Es ist somit nicht erforderlich, daß der mindestens eine Filtereinsatz über einen Zugang verfügt. Diese Ausführungsform des erfindungsgemäßen Filters bietet sich insbesondere für nur schwer zugängliche Filter an, wie sie bei Brennkraftmaschinen vorhanden sind.

Vorteilhaft sind auch Ausführungsformen des Filters, bei denen der mindestens eine Formgedächtniswerkstoff mittels hydrostatischem Druck steuerbar ist und mindestens einen Übergangsdruck P₁ als Transformationspunkt aufweist, bei der der mindestens eine Filtereinsatz von einer ersten Konfiguration in eine zweite Konfiguration übergeht.

Vorteilhaft sind Ausführungsformen des Filters, bei denen der mindestens eine Formgedächtniswerkstoff ein sogenannter Zwei-Weg-Formgedächtniswerkstoff ist, so daß der mindestens eine Filtereinsatz sowohl beim Überschreiten eines Transformationspunktes als auch beim Unterschreiten eines - gegebenenfalls anderen - Transformationspunktes seine Konfiguration ändert. Erforderlich ist eine derartige Ausführung des mindestens einen Filtereinsatzes zumindest in den Fällen, in denen die Porosität vergrößert und verkleinert werden soll, beispielsweise bei der oben angesprochenen Reinigung eines Ölfilters, bei der nach der Reinigung die Wiederherstellung der ursprünglichen Porosität angestrebt wird, was einen Zwei-Weg-Formgedächtniswerkstoff erfordert.

Soll hingegen ausschließlich den mit zunehmender Gebrauchsdauer sich verkleinernden Poren entgegengewirkt werden, würde ein Ein-Weg-Formgedächtniswerkstoff ausreichen. Damit könnte den sich verengenden Strömungsquerschnitten der einzelnen Poren dadurch entgegengewirkt werden, daß der Filtereinsatz von der einen in die andere Konfiguration, nämlich die Konfiguration mit den größeren Poren, transformiert wird.

Daß Ausführungsformen des Filters vorteilhaft sind, bei denen bei der zweiten Konfiguration des Filters die Filterporen einen größeren Strömungsquerschnitt freigeben als bei der ersten Konfiguration des Filters, ist damit im Grunde genommen bereits belegt.

Vorteilhaft sind aber dabei insbesondere Ausführungsformen des Filters, bei denen bei der ersten Konfiguration des Filters die Filterporen vollständig verschlossen und bei der zweiten Konfiguration des Filters die Filterporen geöffnet sind. Vorteilhaft an dieser Ausführungsform ist, daß der Filter gleichzeitig als Ventil fungieren kann, ihm also zwei Funktionen zugewiesen werden, wobei es entweder die Strömung des durch ihn hindurchgeführten Fluids vollständig unterbindet oder einen definierten Strömungsquerschnitt freigibt und den durchtretenden Fluidstrom gleichzeitig filtert.

Mehrere Transformationspunkte erhöhen die Vielfalt bei der Steuerung des Filters, insbesondere bei der Variation der Porosität des mindestens einen Filtereinsatzes, welche dann stufenweise und bei einer genügend hohen Anzahl an Transformationspunkten nahezu stufenlos gesteuert werden kann.

Vorteilhaft sind Ausführungsformen des Filters, bei denen der Filtereinsatz als Filtergewebe ausgeführt ist, welches aus sich kreuzenden Gewebefasern aufgebaut ist, wobei die Porengröße und damit die Durchlässigkeit des Filtereinsatzes durch die äußere Gestalt der Gewebefasern, insbesondere durch die Geradlinigkeit der Gewebefasern steuerbar ist.

Die mindestens zwei Konfigurationen des Gewebes bzw. des mindestens einen Filtereinsatzes unterscheiden sich dadurch, daß in der einen Konfiguration die Gewebefasern eine eher längliche Gestalt aufweisen und dadurch zwischen den Gewebefasern Poren ausgebildet werden, die einen genügend großen Strömungsquerschnitt für das zu filternde Fluid freigeben. In einer anderen Konfiguration des mindestens einen Filtereinsatzes weisen die Gewebefasern nicht mehr ihre längliche Gestalt auf, sondern sind mehr oder weniger verdreht. In einem Grenzfall sind die Fasern derart versponnen, daß sie einen geschlossenen, undurchlässigen Filz bilden.

Diese Ausführungsform kann folglich auch als Ventil benutzt werden und wird noch näher im Zusammenhang mit der Figurenbeschreibung erläutert. Wie oben bereits erwähnt, unterbindet dann der Filter entweder die Strömung vollständig oder gibt einen definierten Strömungsquerschnitt frei, wobei der durchtretende Fluidstrom gefiltert wird.

Vorteilhaft sind Ausführungsformen des Filters, bei denen der mindestens eine Filtereinsatz netzartig ausgeführt ist und die Filterporen maschenförmig ausgebildet sind. Im Gegensatz zu dem gerade erläuterten Gewebe ermöglicht diese Ausführungsform die Ausbildung einer symmetrischen Struktur des mindestens einen Filtereinsatzes und des weiteren die Generierung von Maschen bzw. Poren einer vorgebbaren bestimmten Größe. Dabei können die Poren bei der Herstellung des mindestens einen Filtereinsatzes gezielt, beispielsweise in ein ebenes, aus einem Formgedächtniswerkstoff geformten Plättchen, eingebracht werden.

Vorteilhaft sind dabei Ausführungsformen des Filters, bei denen die Filterporen im geöffneten Zustand rhombusförmig oder parallelogrammförmig ausgebildet sind. Vorteilhaft ist an dieser Ausführungsform, daß bei Filtereinsätzen die über eine geschlossene Konfiguration verfügen sollen d. h. bei denen eine Konfiguration sich durch vollständig geschlossenen Poren auszeichnet, diese geschlossenen Poren über eine überaus zufriedenstellende Dichtigkeit verfügen. Begründet ist dies dadurch, daß derartig geformte Poren d. h. rhombusförmig oder parallelogrammförmig ausgebildete Poren sich in leichter Weise verschließen lassen und die die Poren im geöffneten Zustand begrenzenden Seitenränder im geschlossenen Zustand bündig und dicht aneinander liegen.

Diese Ausführungsform kann gleichzeitig als Ventil benutzt werden und wird noch näher im Zusammenhang mit der Figurenbeschreibung erläutert. Wie oben bereits erwähnt, unterbindet dann der Filter entweder die Strömung vollständig oder gibt einen definierten Strömungsquerschnitt frei, wobei der durchtretende Fluidstrom gefiltert wird.

Vorteilhaft sind aber auch Ausführungsformen des Filters, bei denen die Filterporen im geöffneten Zustand sternförmig ausgebildet sind.

Vorteilhaft sind bei im geöffneten Zustand sternförmig ausgebildeten Filterporen Ausführungsformen des Filters, bei denen die die Filterporen seitlich begrenzenden Abschnitte im geöffneten Zustand vom Filtereinsatz hervorstehen. Im geöffneten Zustand - zweite Konfiguration - hat der Filtereinsatz dann eine Topographie, die der einer Käsereibe ähnelt. Dabei stehen die Abschnitte, die die Filterporen seitlich begrenzen, in Form von blattförmigen Zungen hervor.

Vorteilhaft an dieser Ausführungsform ist, daß der mindestens eine Filtereinsatz, wenn er in seiner ersten Konfiguration mit vollständig geschlossenen Poren ausgeführt wird, in dieser geschlossenen Konfiguration über eine hervorragende Dichtheit verfügt. Begründet ist dies dadurch, daß die unsymmetrisch geformten Zungen sich im geschlossenen Zustand der Poren nahtlos zu einem in sich kompakten, geschlossenen Blatt zusammenfügen, wobei die einzelnen Zungen sich gegeneinander abstützen und ineinander greifen, was zu einer hohen Stabilität und Dichtheit im geschlossenen Zustand führt. Diese Ausführungsform kann gleichzeitig als Ventil benutzt werden und wird noch näher im Zusammenhang mit der Figurenbeschreibung erläutert.

Die zweite der Erfindung zugrundeliegende Teilaufgabe wird gelöst durch die folgenden Verwendungen des erfindungsgemäßen Filters.

Vorteilhaft sind dabei Verwendungen des Filters, bei denen der Filter als Kraftstoffilter im Kraftstoffsystem einer Brennkraftmaschine verwendet wird.

Vorteilhaft sind auch Verwendungen des Filters, bei denen der Filter als Ölfilter im Ölkreislauf einer Brennkraftmaschine verwendet wird.

Vorteilhaft sind Verwendungen des Filters, bei denen der Filter als Luftfilter in der Luftzufuhr einer Brennkraftmaschine verwendet wird.

Vorteilhaft sind dabei Verwendungen des Filters, bei denen der Filter als Luftfilter in der Frischluftzufuhr eines Fahrzeuges verwendet wird.

Vorteilhaft sind dabei Verwendungen des Filters, bei denen der Filter als Luftfilter in der Klimaanlage eines Fahrzeuges verwendet wird.

Im folgenden wird die Erfindung anhand von fünf Ausführungsbeispielen gemäß den Figuren 1 bis 11 näher beschrieben. Hierbei zeigt:
- Fig. 1: schematisch eine erste Ausführungsform eines Filtereinsatzes in der Draufsicht,
- Fig. 2a: die in Figur 1 kenntlich gemachte Einzelheit X in einer Vergrößerung in der Draufsicht mit geöffneter Pore,
- Fig. 2b: die in Figur 1 kenntlich gemachte Einzelheit X in einer Vergrößerung in der Draufsicht mit geschlossener Pore,
- Fig. 3: die in Figur 2a dargestellte Einzelheit X in der Seitenansicht,
- Fig. 4: schematisch eine zweite Ausführungsform eines Filtereinsatzes in der Draufsicht mit geöffneten Poren,
- Fig. 5: die in Figur 4 dargestellte Ausführungsform in der Draufsicht mit geschlossenen Poren,
- Fig. 6: schematisch eine dritte Ausführungsform eines Filtereinsatzes in der Draufsicht mit geöffneten Poren,
- Fig. 7: die in Figur 6 dargestellte Ausführungsform in der Draufsicht mit geschlossenen Poren,
- Fig. 8: schematisch eine vierte Ausführungsform eines Filtereinsatzes in der Draufsicht mit weit geöffneten Poren,
- Fig. 9: die in Figur 8 dargestellte Ausführungsform in der Draufsicht mit weniger weit geöffneten Poren,
- Fig. 10: schematisch eine fünfte Ausführungsform eines Filtereinsatzes in der Draufsicht mit geöffneten Poren, und
- Fig. 11: die in Figur 10 dargestellte Ausführungsform in der Draufsicht mit geschlossenen Poren.

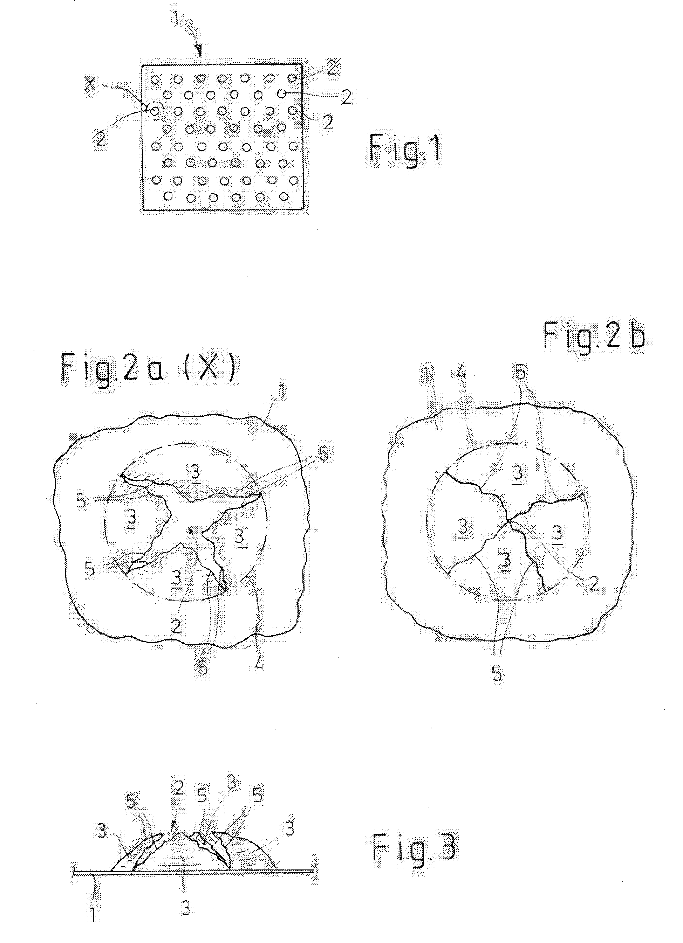

Die Figuren 1 bis 3 zeigen schematisch eine erste Ausführungsform eines Filtereinsatzes 1, wobei Figur 1 diese erste Ausführungsform in der Draufsicht darstellt. Der Filtereinsatz 1 ist rechteckig und verfügt über eine Vielzahl von symmetrisch in Reihen angeordneten Filterporen 2.

Figur 2a zeigt die in Figur 1 kenntlich gemachte Einzelheit X in einer Vergrößerung und in der Draufsicht, wobei die Filterpore 2 geöffnet ist. Die Filterpore 2 ist im geöffneten Zustand von ihrer Grundform her sternförmig ausgebildet und wird außen von einem Grundkreis 4 umschlossen. Die Filterpore 2 wird seitlich von - im vorliegenden Beispiel - vier seitlichen, zungenförmig ausgebildeten Abschnitten 3 begrenzt. Jeder seitliche Abschnitt 3 wird wiederum von zwei ungleichförmigen Seitenrändern 5 begrenzt.

Wie Figur 3, welche die in Figur 2a dargestellte und geöffnete Filterpore 2 in der Seitenansicht zeigt, entnommen werden kann, stehen die die Filterpore 2 seitlich begrenzenden Abschnitte 3 im geöffneten Zustand vom Filtereinsatz 1 hervor. Im geöffneten Zustand hat der Filtereinsatz 1 eine Topographie, die der einer Käsereibe ähnelt. Dabei stehen die Abschnitte 3, die die Filterpore 2 seitlich begrenzen, in Form von blattförmigen Zungen 3 nach oben ab.

Vorteilhaft an dieser Ausführungsform ist, daß der Filtereinsatz 1 bei vollständig geschlossenen Poren 2 über eine hervorragende Dichtigkeit verfügt, wie Figur 2b, welche die Pore 2 im geschlossenen Zustand zeigt, entnommen werden kann.

Der Grund für die gute Dichtigkeit ist, daß die unsymmetrisch geformten Zungen 3 sich im geschlossenen Zustand der Pore 2 nahtlos zu einem in sich kompakten, geschlossenen Blatt zusammenfügen, wobei die ungleichförmigen Ränder 5 der einzelnen Zungen 3 ineinander greifen, was zu einer hohen Stabilität und Dichtheit im geschlossenen Zustand führt. Diese Ausführungsform kann daher auch gut als Ventil genutzt werden.

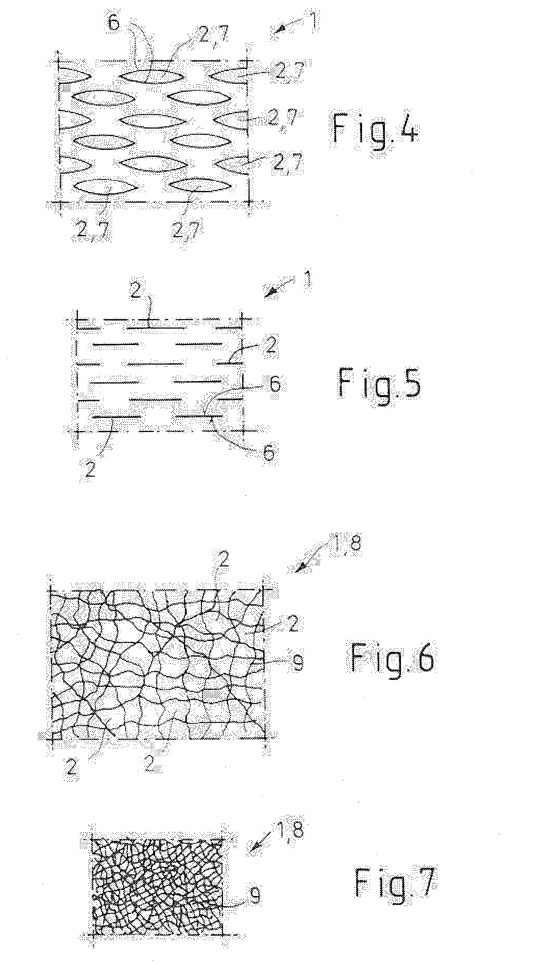

Figur 4 zeigt schematisch eine zweite Ausführungsform eines Filtereinsatzes 1 in der Draufsicht mit geöffneten Poren 2. Der Filtereinsatz 1 ist netzartig ausgebildet, wobei die Filterporen 2 maschenförmig sind. Diese Ausführungsform ermöglicht die Ausbildung einer gleichmäßigen Struktur und des weiteren die Generierung von Maschen 7 bzw. Poren 2 einer bestimmten einheitlichen Größe. Dabei werden die Poren 2 bei der Herstellung des Filtereinsatzes 1 gezielt in ein ebenes, aus einem Formgedächtniswerkstoff geformtes Plättchen eingebracht.

Bei der in Figur 4 dargestellten Ausführungsform sind die Filterporen 2 im geöffneten Zustand rhombusförmig ausgebildet. Vorteilhaft ist an dieser Ausführungsform, daß bei Filtereinsätzen 1, die über eine geschlossene Konfiguration verfügen d. h. bei denen eine Konfiguration sich durch vollständig geschlossene Poren 2 auszeichnet, diese geschlossenen Poren 2 über eine überaus zufriedenstellende Dichtigkeit verfügen, wie Figur 5 entnommen werden kann, welche die in Figur 4 dargestellte Ausführungsform mit geschlossenen Poren 2 zeigt.

Begründet ist dies dadurch, daß rhombusförmig ausgebildete Poren 2 sich leicht und in zufriedenstellender Weise verschließen lassen, beispielsweise durch eine geradlinige Transformation, vorliegend einer Kompression, des Filtereinsatzes 1 quer zu der Porenlängsrichtung. Die die Poren 2 im geöffneten Zustand begrenzenden Seitenränder 6 liegen im geschlossenen Zustand bündig und dicht aneinander.

Diese Ausführungsform kann gleichzeitig als Ventil benutzt werden. Der Filter unterbindet dann entweder die Strömung vollständig oder gibt einen definierten Strömungsquerschnitt frei, wobei der durchtretende Fluidstrom gefiltert wird.

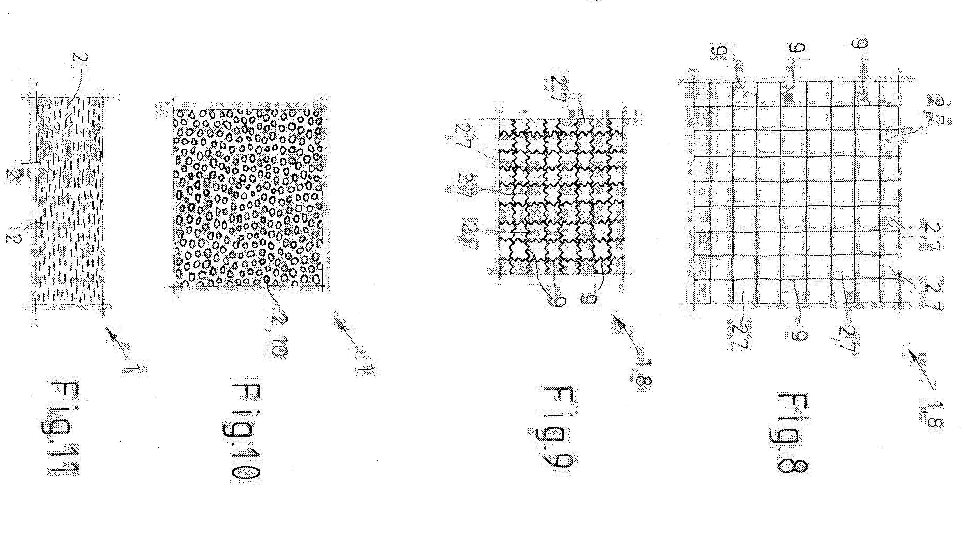

Figur 6 zeigt schematisch eine dritte Ausführungsform eines Filtereinsatzes 1 in der Draufsicht mit geöffneten Poren 2. Bei dieser Ausführungsform ist der Filtereinsatz 1 als Filtergewebe 8 ausgeführt, welches aus sich kreuzenden Gewebefasern 9 aufgebaut ist, wobei die Porengröße und damit die Durchlässigkeit des Filtereinsatzes 1 durch die äußere Gestalt der Gewebefasern 9, insbesondere durch die Geradlinigkeit der Gewebefasern 9 steuerbar ist d. h. beeinflußt werden kann. Die Fasern 9 können dabei wahllos und ohne einer bestimmten Ordnung zu folgen miteinander verwebt sein - siehe Figur 6 und 7 - oder aber gezielt nach einem bestimmten Muster angeordnet werden, wie noch im Zusammenhang mit den Figuren 8 und 9 zu sehen sein wird.

Die mindestens zwei Konfigurationen - siehe Figur 6 und Figur 7 - des Gewebes 8 bzw. des Filtereinsatzes 1 unterscheiden sich dadurch, daß in der einen Konfiguration die Gewebefasern 9 eine eher längliche Gestalt aufweisen - siehe Figur 6 - und dadurch zwischen den Gewebefasern 9 Poren 2 ausgebildet werden, die einen genügend großen Strömungsquerschnitt für das zu filternde Fluid freigeben. In ihrer anderen Konfiguration - siehe Figur 7 - weisen die Gewebefasern 9 nicht mehr ihre eher längliche Gestalt auf, sondern sind mehr oder weniger verdreht.

In dem in Figur 7 dargestellten Grenzfall sind die Fasern 9 derart versponnen bzw. verdreht, daß sie einen geschlossenen, undurchlässigen Filz bilden. Diese Ausführungsform kann folglich auch als Ventil benutzt werden. Wie oben bereits erwähnt, unterbindet dann der Filter entweder die Strömung vollständig oder gibt einen definierten Strömungsquerschnitt frei, wobei der durchtretende Fluidstrom gefiltert wird.

Figur 8 zeigt schematisch eine vierte Ausführungsform eines Filtereinsatzes 1 in der Draufsicht mit weit geöffneten Poren 2 bzw. Maschen 7. Diese Ausführungsform ist der in den Figuren 6 und 7 dargestellten Ausführungsform ähnlich. Bei dieser Ausführungsform ist der Filtereinsatz 1 auch als Filtergewebe 8 ausgebildet d. h aus sich kreuzenden Gewebefasern 9 aufgebaut. Die Porengröße und damit die Durchlässigkeit des Filtereinsatzes 1 wird wiederum durch die äußere Gestalt der Fasern 9 d. h. durch die mehr oder weniger vorhandene bzw. fehlende Geradlinigkeit der Gewebefasern 9 gesteuert.

Die Fasern 9 sind dabei aber nicht wahllos angeordnet, wie bei der in den Figuren 6 und 7 dargestellten Ausführungsform. Die Fasern 9 folgen nämlich einer bestimmten Ordnung und sind nach einem bestimmten Muster angeordnet, nämlich in Form eines Netzes.

Bei der in Figur 8 dargestellten Konfiguration des Filtergewebes 8 sind die Fasern 9 nahezu geradlinig und die Poren 2 bzw. Maschen 7 weit geöffnet. Hingegen sind bei der in Figur 9 dargestellten Konfiguration die Fasern 9 wellenförmig verformt und die Poren 2 bzw. Maschen 7 folglich weniger weit geöffnet.

Figur 10 zeigt in schematischer Darstellung eine fünfte Ausführungsform eines Filtereinsatzes 1 in der Draufsicht mit geöffneten Poren 2. Figur 11 zeigt diese Ausführungsform mit geschlossenen Poren 2.

Bei der dargestellten Ausführungsform ist der Filtereinsatz 1 schaumförmig ausgebildet. Wenn die Schaumblasen 10 geschlossen sind - siehe Figur 11 - liegt der Filtereinsatz 1 in seiner geschlossenen Konfiguration vor.

Diese Ausführungsform kann folglich auch als Ventil benutzt werden. Entweder unterbindet der Filter die Strömung dann vollständig - siehe Figur 11 - oder er gibt einen definierten Strömungsquerschnitt frei, wobei der durchtretende Fluidstrom gefiltert wird, wie in Figur 10 dargestellt.

### Bezugszeichen

- 1: Filtereinsatz
- 2: Filterpore
- 3: seitlicher Abschnitt, Zunge
- 4: der die Pore umschließende Grundkreis
- 5: Rand eines seitlichen Abschnittes
- 6: Seitenrand einer Pore
- 7: Masche
- 8: Filtergewebe
- 9: Faser
- 10: Schaumblasen

- H₁ bis Hₙ: Übergangs-Magnetfeldstärke
- P₁ bis Pₙ: Übergangsdruck
- T': Übergangstemperatur
- T": Übergangstemperatur
- T₁ bis Tₙ: Übergangstemperatur

## Patentansprüche

1. Filter mit mindestens einem mit Filterporen (2) ausgestatteten Filtereinsatz (1), **dadurch gekennzeichnet, daß**
der mindestens eine Filtereinsatz (1) mindestens einen Formgedächtniswerkstoff aufweist, wobei der mindestens eine Formgedächtniswerkstoff n Transformationspunkte - d. h. n Übergangstemperaturen T₁ bis Tₙ, n Übergangs-Magnetfeldstärken H₁ bis Hₙ oder n Übergangsdrücke P₁ bis Pₙ - aufweist, bei denen der mindestens eine Filtereinsatz (1) von einer Konfiguration in eine andere Konfiguration übergeht, wobei der mindestens eine Filtereinsatz (1) (n+1) Konfigurationen aufweist.

2. Filter nach Anspruch 1,
**dadurch gekennzeichnet, daß**
der mindestens eine Filtereinsatz (1) eine Matrix aufweist, in welche der Formgedächtniswerkstoff, vorzugsweise in Form von Fasern (9), eingebettet ist.

3. Filter nach Anspruch 2,
**dadurch gekennzeichnet, daß**
die Matrix vorwiegend aus Aluminium oder Plastik gefertigt ist.

4. Filter nach Anspruch 1,
**dadurch gekennzeichnet, daß**
der mindestens eine Filtereinsatz (1) ein Trägersubstrat aufweist, auf das der Formgedächtniswerkstoff aufgetragen, vorzugsweise aufgesputtert, ist.

5. Filter nach einem der vorherigen Ansprüche,
**dadurch gekennzeichnet, daß**
der mindestens eine Formgedächtniswerkstoff ein Formgedächtniswerkstoff aus der folgenden Gruppe ist: NiTi (Nitinol), Fe-Pt, Cu-Al-Ni, Fe-Pd, Fe-Ni, Cu-Zn-Al, CuAlMn, Keramik, insbesondere Ce-TZP-Keramik.

6. Filter nach einem der vorherigen Ansprüche,
**dadurch gekennzeichnet, daß**
der mindestens eine Formgedächtniswerkstoff mittels Temperatur steuerbar ist und mindestens eine Übergangstemperatur T1 als Transformationspunkt aufweist, bei der der mindestens eine Filtereinsatz (1) von der ersten Konfiguration in die zweite Konfiguration übergeht.

7. Filter nach einem der Ansprüche 1 bis 5,
**dadurch gekennzeichnet, daß**
der mindestens eine Formgedächtniswerkstoff mittels Magnetfeld steuerbar ist und mindestens eine Übergangs-Magnetfeldstärke H1 als Transformationspunkt aufweist, bei der der mindestens eine Filtereinsatz (1) von der ersten Konfiguration in die zweite Konfiguration übergeht.

8. Filter nach einem der Ansprüche 1 bis 5,
**dadurch gekennzeichnet, daß**
der mindestens eine Formgedächtniswerkstoff mittels hydrostatischem Druck steuerbar ist und mindestens einen Übergangsdruck P1 als Transformationspunkt aufweist, bei der der mindestens eine Filtereinsatz (1) von der ersten Konfiguration in die zweite Konfiguration übergeht.

9. Filter nach einem der vorherigen Ansprüche,
**dadurch gekennzeichnet, daß**
der mindestens eine Formgedächtniswerkstoff ein sogenannter Zwei-Weg-Formgedächtniswerkstoff ist, so daß der mindestens eine Filtereinsatz (1) sowohl beim Überschreiten eines Transformationspunktes als auch beim Unterschreiten eines - gegebenenfalls anderen - Transformationspunktes seine Konfiguration ändert.

10. Filter nach einem der vorherigen Ansprüche,
**dadurch gekennzeichnet, daß**
bei der zweiten Konfiguration des Filtereinsatzes (1) die Filterporen (2) einen größeren Strömungsquerschnitt freigeben als bei der ersten Konfiguration des Filtereinsatzes (1).

11. Filter nach einem der vorherigen Ansprüche,
**dadurch gekennzeichnet, daß**
bei der ersten Konfiguration des Filtereinsatzes (1) die Filterporen (1) vollständig verschlossen und bei der zweiten Konfiguration des Filtereinsatzes (1) die Filterporen (2) geöffnet sind.

12. Filter nach einem der vorherigen Ansprüche,
**dadurch gekennzeichnet, daß**
der mindestens eine Filtereinsatz (1) als Filtergewebe (8) ausgeführt ist, welches aus sich kreuzenden Gewebefasern (9) aufgebaut ist, wobei die Porengröße und damit die Durchlässigkeit des Filtereinsatzes (1) durch die äußere Gestalt der Gewebefasern (9), insbesondere durch die Geradlinigkeit der Gewebefasern (9) steuerbar ist.

13. Filter nach einem der Ansprüche 1 bis 11,
**dadurch gekennzeichnet, daß**
der mindestens eine Filtereinsatz (1) netzartig ausgeführt ist und die Filterporen (2,8) maschenförmig ausgebildet sind.

14. Filter nach Anspruch 13,
**dadurch gekennzeichnet, daß**
die Filterporen (1,8) im geöffneten Zustand rhombusförmig oder parallelogrammförmig ausgebildet sind.

15. Filter nach Anspruch 13,
**dadurch gekennzeichnet, daß**
die Filterporen (2) im geöffneten Zustand sternförmig ausgebildet sind.

16. Filter nach Anspruch 15,
**dadurch gekennzeichnet, daß**
die die Filterporen (2) seitlich begrenzenden Abschnitte (3) im geöffneten Zustand vom Filtereinsatz (1) hervorstehen.

17. Verwendung eines Filters nach einem der vorherigen Ansprüche,
**dadurch gekennzeichnet, daß**
der Filter als Kraftstoffilter im Kraftstoffsystem einer Brennkraftmaschine verwendet wird.

18. Verwendung eines Filters nach einem der Ansprüche 1 bis 16,
**dadurch gekennzeichnet, daß**
der Filter als Ölfilter im Ölkreislauf einer Brennkraftmaschine verwendet wird.

19. Verwendung eines Filters nach einem der Ansprüche 1 bis 16,
**dadurch gekennzeichnet, daß**
der Filter als Luftfilter in der Luftzufuhr einer Brennkraftmaschine verwendet wird.

20. Verwendung eines Filters nach einem der Ansprüche 1 bis 16,
**dadurch gekennzeichnet, daß**
der Filter als Luftfilter in der Frischluftzufuhr eines Fahrzeuges verwendet wird.

21. Verwendung eines Filters nach einem der Ansprüche 1 bis 16,
**dadurch gekennzeichnet, daß**
der Filter als Luftfilter in der Klimaanlage eines Fahrzeuges verwendet wird.

## Claims

1. Filter having at least one filter insert (1) provided with filter pores (2), **characterized in that** the at least one filter insert (1) comprises at least one shape memory material, the at least one shape memory material having n transformation points - i.e. n transition temperatures T₁ to Tₙ, n transition magnetic field strengths H₁ to Hₙ or n transition pressures P₁ to Pₙ, at which the at least one filter insert (1) changes from one configuration into another configuration, the at least one filter insert (1) having (n+1) configurations.

2. Filter according to Claim 1, **characterized in that** the at least one filter insert (1) comprises a matrix in which the shape memory material is embedded, preferably in the form of fibres (9).

3. Filter according to Claim 2, **characterized in that** the matrix is made predominantly of aluminium or plastic.

4. Filter according to Claim 1, **characterized in that** the at least one filter insert (1) comprises a carrier substrate onto which the shape memory material is applied, preferably sputtered.

5. Filter according to one of the preceding claims, **characterized in that**
the at least one shape memory material is a shape memory material from the following group: NiTi (nitinol), Fe-Pt, Cu-Al-Ni, Fe-Pd, Fe-Ni, Cu-Zn-Al, CuAlMn, ceramic, in particular Ce-TZP ceramic.

6. Filter according to one of the preceding claims, **characterized in that**
the at least one shape memory material can be controlled by means of temperature and has at least one transition temperature T1 as a transformation point, at which the at least one filter insert (1) changes from the first configuration into the second configuration.

7. Filter according to one of Claims 1 to 5, **characterized in that**
the at least one shape memory material can be controlled by means of a magnetic field and has at least one transition magnetic field strength H1 as a transformation point, at which the at least one filter insert (1) changes from the first configuration into the second configuration.

8. Filter according to one of Claims 1 to 5, **characterized in that**
the at least one shape memory material can be controlled by means of hydrostatic pressure and has at least one transition pressure P1 as a transformation point, at which the at least one filter insert (1) changes from the first configuration into the second configuration.

9. Filter according to one of the preceding claims, **characterized in that**
the at least one shape memory material is a so-called two-way shape memory material, such that the at least one filter insert (1) changes its configuration both when exceeding a transformation point and when falling below an - optionally different - transformation point.

10. Filter according to one of the preceding claims, **characterized in that**
the filter pores (2) release a larger flow cross section in the second configuration of the filter insert (1) than in the first configuration of the filter insert (1).

11. Filter according to one of the preceding claims, **characterized in that**
the filter pores (2) are fully closed in the first configuration of the filter insert (1) and the filter pores (2) are open in the second configuration of the filter insert (1).

12. Filter according to one of the preceding claims, **characterized in that**
the at least one filter insert (1) is configured as a filter fabric (8) which is constructed from fabric fibres (9) that cross one another, the pore size and therefore the permeability of the filter insert (1) being controllable by the external conformation of the fabric fibres (9), in particular by the rectilinearity of the fabric fibres (9).

13. Filter according to one of Claims 1 to 11, **characterized in that**
the at least one filter insert (1) is configured in the manner of a net and the filter pores (2, 8) are formed in a mesh shape.

14. Filter according to Claim 13, **characterized in that**
the filter pores (2, 8) are formed in the shape of a rhombus or in the shape of a parallelogram in the open state.

15. Filter according to Claim 13, **characterized in that**
the filter pores (2) are formed in the shape of a star in the open state.

16. Filter according to Claim 15, **characterized in that**
sections (3) laterally delimiting the filter pores (2) stand out from the filter insert (1) in the open state.

17. Use of a filter according to one of the preceding claims, **characterized in that**
the filter is used as a fuel filter in the fuel system of a combustion engine.

18. Use of a filter according to one of Claims 1 to 16, **characterized in that**
the filter is used as an oil filter in the oil circuit of a combustion engine.

19. Use of a filter according to one of Claims 1 to 16, **characterized in that**
the filter is used as an air filter in the air supply of a combustion engine.

20. Use of a filter according to one of Claims 1 to 16, **characterized in that**
the filter is used as an air filter in the fresh air supply of a vehicle.

21. Use of a filter according to one of Claims 1 to 16, **characterized in that**
the filter is used as an air filter in the air-conditioning system of a vehicle.

## Revendications

1. Filtre présentant au moins une garniture de filtre (1) dotée de pores (2),
**caractérisé en ce que**
la ou les garnitures de filtre (1) présentent au moins un matériau à mémoire de forme, le ou les matériaux à mémoire de forme présentant n points de transformation, c'est-à-dire n températures de transition T₁ à Tₙ, n intensités de champ magnétique de transition H₁ à Hₙ ou n pressions de transition P₁ à Pₙ auxquelles la ou les garnitures de filtre (1) passent d'une configuration à une autre configuration, la ou les garnitures de filtre (1) présentant (n+1) configurations.

2. Filtre selon la revendication 1, **caractérisé en ce que** la ou les garnitures de filtre (1) présentent une matrice dans laquelle le matériau à mémoire de forme est incorporé de préférence sous la forme de fibres (9).

3. Filtre selon la revendication 2, **caractérisé en ce que** la matrice est réalisée principalement à partir d'aluminium ou de matière plastique.

4. Filtre selon la revendication 1, **caractérisé en ce que** la ou les garnitures de filtre (1) présentent un substrat porteur sur lequel le matériau à mémoire de forme est appliqué et de préférence pulvérisé.

5. Filtre selon l'une des revendications précédentes, **caractérisé en ce que** le ou les matériaux à mémoire de forme sont des matériaux à mémoire de forme sélectionnés dans l'ensemble suivant : NiTi (nitinol), Fe-Pt, Cu-Al-Ni, Fe-Pd, Fe-Ni, Cu-Zn-Al, CuAlMn, céramique et en particulier céramique TZP au Ce.

6. Filtre selon l'une des revendications précédentes, **caractérisé en ce que** le ou les matériaux à mémoire de forme peuvent être contrôlés au moyen de la température et présentent au moins une température de transition T1 comme point de transformation auquel la ou les garnitures de filtre (1) passent de la première configuration à la deuxième configuration.

7. Filtre selon l'une des revendications 1 à 5, **caractérisé en ce que** le ou les matériaux à mémoire de forme peuvent être contrôlés au moyen d'un champ magnétique et présentent au moins une intensité de champ magnétique de transition H1 comme point de transformation auquel la ou les garnitures de filtre (1) passent de la première configuration à la deuxième configuration.

8. Filtre selon l'une des revendications 1 à 5, **caractérisé en ce que** le ou les matériaux à mémoire de forme peuvent être contrôlés au moyen de la pression hydrostatique et présentent au moins une pression de transition P1 comme point de transformation auquel la ou les garnitures de filtre (1) passent de la première configuration à la deuxième configuration.

9. Filtre selon l'une des revendications précédentes, **caractérisé en ce que** le ou les matériaux à mémoire de forme sont des matériaux à mémoire de forme dits "à double effet", de telle sorte que la ou les garnitures de filtre (1) changent de configuration aussi bien lorsqu'un point de transformation est dépassé que lorsqu'un point de transformation, éventuellement différent, n'est pas atteint.

10. Filtre selon l'une des revendications précédentes, **caractérisé en ce que** dans la deuxième configuration de la garniture de filtre (1), les pores (2) du filtre libèrent une plus grande section transversale d'écoulement que dans la première configuration de la garniture de filtre (1).

11. Filtre selon l'une des revendications précédentes, **caractérisé en ce que** dans la première configuration de la garniture de filtre (1), les pores (2) du filtre sont complètement fermés, les pores (2) du filtre étant ouverts dans la deuxième configuration de la garniture de filtre (1).

12. Filtre selon l'une des revendications précédentes, **caractérisé en ce que** la ou les garnitures de filtre (1) sont réalisées sous la forme d'un tissu (8) de filtre constitué de fibres tissées (9) qui se croisent, la taille des pores et donc la perméabilité de la garniture de filtre (1) pouvant être contrôlée par la forme extérieure des fibres (9) du tissu et en particulier par la rectilinéarité des fibres (9) du tissu.

13. Filtre selon l'une des revendications 1 à 11, **caractérisé en ce que** la ou les garnitures de filtre (1) présentent la forme d'un treillis et les pores (2, 8) du filtre ont la forme de mailles.

14. Filtre selon la revendication 13, **caractérisé en ce que** les pores (2, 8) du filtre ont à l'état ouvert la forme de losanges ou de parallélogrammes.

15. Filtre selon la revendication 13, **caractérisé en ce que** les pores (2) du filtre ont à l'état ouvert la forme d'étoiles.

16. Filtre selon la revendication 15, **caractérisé en ce que** les segments (3) qui délimitent latéralement les pores (2) du filtre débordent lorsque la garniture de filtre (1) est à l'état ouvert.

17. Utilisation d'un filtre selon l'une des revendications précédentes, **caractérisée en ce que** le filtre est utilisé comme filtre à carburant dans le système de carburant d'une machine à combustion interne.

18. Utilisation d'un filtre selon l'une des revendications 1 à 16, **caractérisée en ce que** le filtre est utilisé comme filtre à huile dans le circuit d'huile d'un moteur à combustion interne.

19. Utilisation d'un filtre selon l'une des revendications 1 à 16, **caractérisée en ce que** le filtre est utilisé comme filtre à air dans l'admission d'air d'un moteur à combustion interne.

20. Utilisation d'un filtre selon l'une des revendications 1 à 16, **caractérisée en ce que** le filtre est utilisé comme filtre à air pour l'apport d'air frais à un véhicule.

21. Utilisation d'un filtre selon l'une des revendications 1 à 16, **caractérisée en ce que** le filtre est utilisé comme filtre à air dans l'installation de climatisation d'un véhicule.
